# EUROPÄISCHE PATENTSCHRIFT

(11) **EP 0 683 914 B1**
(45) Veröffentlichungstag und Bekanntmachung des Hinweises auf die Patenterteilung: **18.09.1996**
(21) Anmeldenummer: 94906868.8
(22) Anmeldetag: 14.02.1994
(51) Int. Cl.: G09F 15/00, G09F 7/12, G09B 29/00, G09F 1/10

(54) **VORRICHTUNG ZUM ORDNEN UND PRÄSENTIEREN VON INFORMATIONEN**
DEVICE FOR STORING AND PRESENTING INFORMATION
DISPOSITIF DE CLASSEMENT ET DE PRESENTATION D'INFORMATIONS

(30) Priorität: 15.02.1993 DE 4304409; 23.03.1993 DE 4309216
(43) Veröffentlichungstag der Anmeldung: 29.11.1995
(73) Patentinhaber: THOMAS, Carmen, D-50933 Köln (DE)
(72) Erfinder: THOMAS, Carmen, D-50933 Köln (DE)
(74) Vertreter: Bauer, Wulf, Dr.
(86) Internationale Anmeldenummer: DE9400149
(87) Internationale Veröffentlichungsnummer: WO9418660

(56) Entgegenhaltungen:
- DE-A- 3 107 317
- DE-U- 9 016 758
- FR-A- 2 648 937
- US-A- 4 979 901

## Beschreibung

### Vorrichtung zum Ordnen und Präsentieren von Informationen

Die Erfindung betrifft eine Vorrichtung zum Ordnen und Präsentieren von Informationen. Sie betrifft insbesondere eine derartige Vorrichtung, mit der in Worte oder Symbole gefaßte Informationen zunächst gesammelt und dann in beliebiger Form gegliedert dargestellt werden können.

Zum Stand der Technik für Vorrichtungen der eingangs genannten Art gehören Schultafeln, Präsentationsvorrichtungen wie Flip-charts, Overhead-Projektoren und dergl. FR-A-2 648 937 zeigt eine Informations vorrichtung mit tafelartiger Platte auf der Papierblätter mehrmals klebbar sind.

Unter Informationen werden Worte oder bildliche Darstellungen verstanden, die sich auf einer kleinen Fläche, deren Format typischerweise kleiner ist als das Format einer Visitenkarte, darstellen lassen. Bestimmt ist die erfindungsgemäße Vorrichtung für das individuelle Verarbeiten derartiger Informationen durch einen Einzelnen oder durch eine Gruppe mehrerer Menschen. Unter Ordnen von Informationen der genannten Art wird die Möglichkeit verstanden, die Informationen in beliebiger Weise auf einer Fläche anzuordnen. Als Darstellen von Informationen bei einer Vorrichtung der eingangs genannten Art wird die Möglichkeit bezeichnet, die einzelnen Informationen in ihrer geordneten oder noch ungeordneten Zusammenstellung für das eigene Studium oder für eine Besprechung in einer Gruppe in einer lesbaren, fixierten Anordnung zur Verfügung zu haben. Unter Präsentieren wird dann der nächste Schritt nach einer Darstellung, nämlich das Vorstellen derartiger Informationen, die sich in fester, aber dennoch variierbarer Anordnung zueinander befinden, verstanden.

Der Erfindung liegt die Aufgabe zugrunde, eine Vorrichtung der eingangs genannten Art anzugeben und die vorbekannten Vorrichtungen so weiter zu bilden, daß mit einfachen technischen Hilfsmitteln Informationen der genannten Art notiert, geordnet, dargestellt und präsentiert werden können.

Gelöst wird diese Aufgabe durch eine Vorrichtung zum Ordnen und Präsentieren von Informationen mit a) einer tafelartigen Platte, die einerseits einen planen Oberflächenbereich hat, auf dem mindestens ein Blatt Papier befestigbar ist und die andererseits einen metallischen, magnetisierbaren Rand hat und mit b) einer Mehrzahl von Notizeinheiten, die jeweils aus einem flachen, permanentmagnetischen Träger und mehreren, nebeneinander auf diesem Träger angeordneten Blöcken aus gleichformatigen Zetteln bestehen, die rückseitig zumindest teilweise mit Haftkleber beschichtet sind und die aufgrund dieser Beschichtung auf dem Träger festgelegt sind, wobei die Notizeinheit aufgrund des magnetischen Trägers lösbar auf dem magnetisierbaren Rand der Platte haften.

Auf den einzelnen Zetteln der Blöcke der Notizeinheiten können Informationen aufgezeichnet werden, beispielsweise aufgeschrieben werden oder aufgedruckt sein. Die Notizeinheiten eignen sich aufgrund ihrer Größe und Ausbildung dazu, daß die jeweils obersten Zettel der einzelnen Blocks direkt beschrieben werden können. Die Zettel können aber auch vom Block abgerissen und auf ein Blatt Papier, das auf der tafelartigen Platte befestigt ist, aufgeklebt und dort beschrieben werden.

Die erfindungsgemäße Vorrichtung eignet sich somit dazu, die bei einer Suche nach Informationen, beispielsweise bei einer Stoffsammlung oder einem brain-storming, anfallenden und aufgefundenen Informationen rasch zu notieren, somit permanent festzuhalten und zunächst in beliebiger, im allgemeinen ungeordneter Reihenfolge auf dem Blatt Papier der tafelartigen Platte körperlich zu fixieren. Sie eignet sich ebenso für das Festhalten spontaner Einfälle oder Überlegungen, die zunächst noch nicht in einen konkreten Sachzusammenhang gestellt werden können und die ein Bearbeiter zunächst einfach wiederfindbar festhalten und ablegen möchte. In diesem Fall kann er die auf den einzelnen Haftzetteln befindlichen Informationen auf unterschiedlichen Blättern oder in unterschiedlichen Bereichen eines Blattes fixieren.

In einem dem Auffinden und Aufschreiben der Informationen nachfolgenden Schritt eignet sich nun die Vorrichtung auch zum Ordnen der Informationen. Die Haftzettel lassen sich wiederholt aufnehmen und neu auf demselben oder einem anderen Blatt Papier fixieren. Dadurch kann die Reihenfolge der Zettel beliebig verändert werden. Auf diese Weise lassen sich solche Informationen, die einem Oberbegriff übergeordnet werden können, zu Gruppen, insbesondere übereinander, zusammentragen und darstellen.

Schließlich kann die als Ergebnis des zweiten Schrittes erhaltene, geordnete Abfolge der Informationen präsentiert werden, beispielsweise Dritten vorgestellt werden. Ebenso kann die geordnete Darstellung der Informationen aber auch abgelegt und später wieder einmal aufgenommen und weiter bearbeitet oder kopiert werden. Dabei ist es vorteilhaft, daß sich die Klebezettel auf einem größeren Bogen Papier, z.B. DIN A4, befinden, somit einfach abgeheftet und abgelegt werden können wie normale Papierblätter, beispielsweise Briefe.

Die erfindungsgemäße Vorrichtung ermöglicht somit eine einfache und für den Benutzer praktische und direkte Umsetzung von Gedanken in eine übersichtlich dargestellte, gut präsentierbare und auf Dauer körperlich vorhandene Form. Im Gegensatz zu einem Notieren der Informationen direkt auf dem Blatt Papier wird ohne zusätzliche Schreibarbeit der Übergang vom Sammeln der Gedanken bis zu ihrer Darstellung als geordnete Informationen erreicht. So benötigt der Benutzer kein zweites Blatt Papier und keinen zusätzlichem Aufwand (Schreibaufwand), um eine Stoffsammlung zu gliedern. Er kann zudem die einmal gefundene Gliederung beliebig verändern, hat also eine wesentlich größere Flexibilität in der Darstellung der Informationen als nach dem Stand der Technik.

Dabei ist die Darstellung auf der erfindungsgemäßen Vorrichtung jederzeit bequem korrigierbar, Verschreibungen oder erkannte Schreibfehler können rasch durch Anfertigen eines neuen Zettels beseitigt werden. Unpassende oder nicht einfügbare Informationen können entfernt, z.B. in den Papierkorb geworfen werden. Neue Gedanken, die zu einer neuen Information führen, können jederzeit in das Schema eingefügt werden. Die auf dem Blatt Papier nebeneinander und übereinander angeordneten Zettel, die jeweils die Informationen tragen, lassen sich in beliebiger Strukturierung anordnen, die für das Darstellen und Präsentieren geeignet ist, so lassen sich beispielsweise Untergruppen in einer etwas eingerückten Spalte anbringen, um die mehr nach links ausgerichteten Hauptpunkte stärker herauszustellen.

Durch die lösbare Anordnung mindestens eines Blocks mit Zetteln auf dem permanentmagnetischen Träger haben die Blöcke eine feste räumliche Zuordnung zueinander, dadurch sind die Notizeinheiten bequem handhabbar. Die Notizeinheiten lassen sich an beliebiger Stelle des Randes der tafelartigen Platte lösbar fixieren, dadurch ist eine feste Zuordnung geschaffen, die einzelnen Blöcke mit den Zetteln sind jederzeit griffbereit. Weiterhin können aus dem Vorrat von Notizeinheiten immer diejenigen ausgewählt werden, die für die konkrete Aufgabe besonders geeignet sind. Die Notizeinheiten lassen sich einfach auffüllen, wenn alle Zettel eines Blockes abgenommen worden sind, durch die Haftbeschichtung kleben die Blöcke auf dem Träger. Sollte diese Fixierung nicht ausreichen, kann auch zweiseitiges Klebeband zwischen die einzelnen Blöcke und den permamentmagnetischen Träger eingelegt werden.

Als besonders vorteilhaft hat sich beim praktischen Benutzen der erfindungsgemäßen Vorrichtung herausgestellt, daß die Anwender neben der schon beschriebenen einfachen Umsetzbarkeit von Ideen in eine präsentierfähige Darstellung und der klaren Zuordnung der einzelnen Elemente der Vorrichtung zueinander, insbesondere durch die räumlich feste Zuordnung der Notizeinheiten auf der tafelartigen Platte, ein gewisses spielerisches Vergnügen beim Arbeiten mit der Vorrichtung haben, das darauf zurückgeführt werden kann, daß die meisten Anwender gerne die Magneten anfassen und einsetzen, das Kleben und Umkleben der Haftzettel durchführen und somit insgesamt durch haptische Tätigkeit sich gut auf ihre eigentliche Aufgabe, das Auf- und Zusammenstellen von Informationen, konzentrieren können.

In einer besonders bevorzugten Weiterbildung haben die Notizeinheiten Blöcke mit Zetteln unterschiedlichen Formats. Durch die unterschiedliche Größe der Zettel kann einer Information ein unterschiedliches Gewicht gegeben werden. Weiterhin eignen sich größere Zettel für eine wesentlich größere Darstellung von Informationen, was wiederum eine bessere Strukturierung der Darstellung bietet. Schließlich können auf größeren Zetteln auch längere Informationen, die z.B. mehrere Worte enthalten, aufgebracht werden.

In gleicher Weise hat es sich als vorteilhaft erwiesen, die Zettel der einzelnen Blöcke in unterschiedlichen Färbungen auszuführen, wobei entweder lichte Farben eingesetzt werden, die auf keinen Fall mit der aufgebrachten Schrift konkurrieren, vielmehr diese hervorheben, also beispielweise helle Gelb-, Grün-, Orange- oder Rottöne, oder kräftige Farben verwendet werden. Durch unterschiedliche Farbgebung der Zettel, auf denen sich Informationen befinden, wird die Darstellung übersichtlicher, Hauptpunkte können besser erkannt werden.

Es soll hierbei noch einmal betont werden, daß die Zettel jedes einzelnen Blocks jeweils gleiches Format und gleiche Färbung aufweisen. Es unterscheiden sich die einzelnen Blöcke voneinander, nämlich durch Format und/oder Färbung.

Als tafelartige Platten für die Aufnahme mindestens eines Blatt Papiers haben sich mehrere, unterschiedliche Vorrichtungen bewährt. Für individuelles Arbeiten hat sich eine kleine, handliche Platte, die nur etwas größer ist als ein normales Blatt Papier, sehr bewährt. Sie eignet sich nicht nur für Arbeiten an einem Schreibtisch, sondern auch auf Reisen. In einer vorzugsweisen Weiterbildung hat sie seitliche, klappbare Flügel, sie läßt sich dadurch wie eine Briefmappe verschließen.

In einer anderen Ausführung hat die tafelartige Platte ein wesentlich größeres Format und kann zumindest sechs normale Papierbogen aufnehmen, in dieser Form eignet sie sich für die Darstellung und Präsentation größerer Mengen an Informationen und/oder vor einem größeren Publikum. In diesem Fall hat die tafelartige Platte vorteilhafterweise Standfüße, so daß sie an beliebiger Stelle angeordnet werden kann, sie kann aber auch wie ein Bild aufgehängt werden.

Bei dieser letzteren Ausführung hat es sich als besonders vorteilhaft erwiesen, die Platte mit klappbaren Seitenflügeln oder vorzugsweise teleskopierbar auszubilden, so daß teilweise eine größere oder kleinere Fläche für die Aufnahme der Blätter Papier zur Verfügung steht. Dabei ist jeweils auch der Rand vorhanden, auf dem die Notizeinheiten magnetisch befestigt werden können. Vorteilhaft ist beispielsweise auch eine Anordnung mehrerer kleiner Tafeln in Form eines Leporello mit Standfüßen.

Eine weitere Ausbildungsform der tafelartigen Platte ist eine pultartige Anordnung, die auf einen Tisch aufgelegt werden kann. Sie eignet sich vorzugsweise für das individuelle Arbeiten und hat gegenüber der zuerst beschriebenen Platte den Vorteil, daß das praktische Arbeiten vereinfacht und eine bessere Ergonomie erreicht wird.

Als besonders günstig hat es sich erwiesen, mehrere Notizeinheiten gemeinsam in einer Dose oder einer Schale unterzubringen und anzuordnen, wobei sich die Notizeinheiten vorzugsweise in einer Lage nebeneinander befinden und magnetisch auf einer Aufnahmewand der Dose haften. Diese Dosen dienen einerseits als Vorrat für die Notizeinheiten, andererseits schützen sie in geschlossenem Zustand die Blöcke und Zettel der Notizeinheiten. Aufgrund der Magnetverbindung können gezielt jeweils diejenigen Notizeinheiten aus einer Dose entnommen werden, die für ein spezielles Vorhaben benötigt werden, beispielsweise Notizeinheiten mit insbesondere kleinformatigen Zetteln, vorzugsweise gelben Zetteln oder dergl. Als besonders günstig hat es sich dabei in einer Weiterbildung gezeigt, wenn die der Aufnahmewand gegenüberliegende Wand der Dose durchsichtig ist, so daß man ohne Öffnen der Dose direkt erkennen kann, welche Notizeinheiten sich in der Dose befinden.

Insgesamt ermöglicht die erfindungsgemäße Vorrichtung somit eine rasche und bequeme Umsetzung von Gedanken in eine Darstellung und Präsentierung geordneter Informationen. Die erfindungsgemäße Vorrichtung ermöglicht eine schnell erfaßbare und auch veränderbare Zuordnung der einzelnen Informationen. Durch Blicken und Denken lassen sich Informationen darstellen, umordnen und präsentieren, dieses Vorgehen wird daher als Blick-Denk-Technik bezeichnet.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser Zeichnung zeigen:
- Fig. 1: eine perspektivische Darstellung einer Notizeinheit mit einem permanentmagnetischen, flachen Träger und insgesamt fünf Blöcken mit Zetteln,
- Fig. 2: eine Draufsicht auf eine tafelartige Platte in Form einer Reisemappe,
- Fig. 3: eine Frontansicht einer tafelartigen Platte in Form einer Präsentationstafel mit einer Vielzahl von Blättern Papier,
- Fig. 4: eine perspektivische Darstellung einer tafelartigen Platte in Form eines auf einen Tisch auflegbaren Pultes, und
- Fig. 5: eine perspektivische Darstellung einer Dose für die Aufbewahrung mehrerer Notizeinheiten.

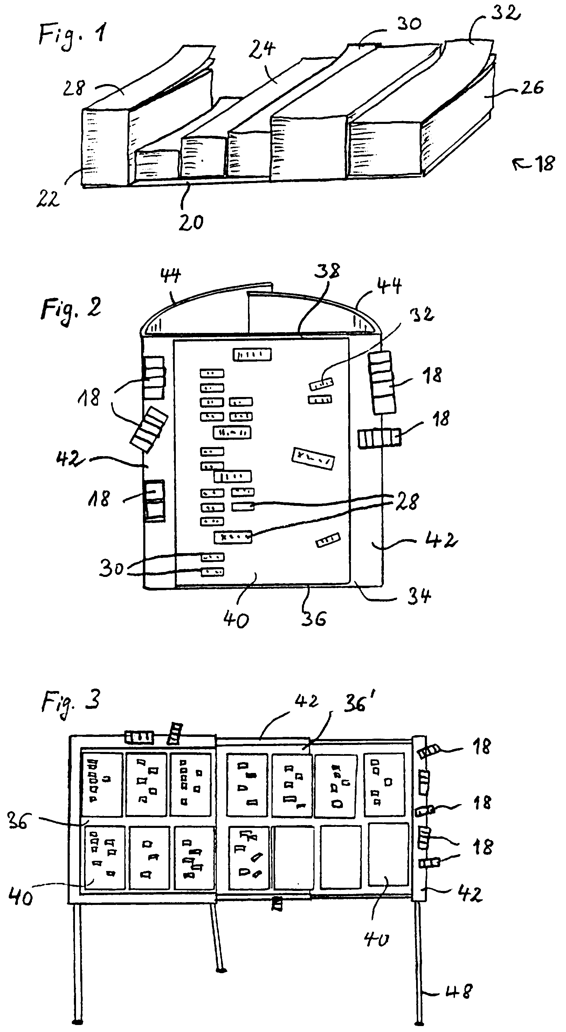

Fig. 1 zeigt eine typische Notizeinheit 18. Sie besteht aus einem permanentmagnetischen, flachen Träger 20, der im gezeigten Ausführungsbeispiel Rechteckform hat, und aus einer Anzahl von auf dessen Oberseite angeordneten Blöcken 22, 24, 26 aus Zetteln, von denen einige beispielhaft mit den Bezugszeichen 28, 30, 32 versehen sind. Wie die Figur zeigt, besteht jeder Block 22-26 jeweils aus gleichformatigen Zetteln 28 - 32, weiterhin sind die Zettel eines Blocks auch gleich gefärbt, beispielsweise diejenigen des Blocks 22 sind gelb, diejenigen des Blocks 24 hellrot. Die Zettel 28-32 haben an ihrer dem Träger 20 zugewandten Unterseite eine teilflächige Beschichtung mit einem Haftkleber, was dazu führt, daß sie am in der Figur vornliegenden Teilbereich der einzelnen Blöcke 22-26 aufeinander haften, im hinteren Bereich jedoch nicht, was durch das dort auftretende teilweise Hochwölben der kleinen Zettel dargestellt ist.

Auf dem Träger 20 kann ein Block oder können mehrere Blöcke 22-26 in beliebiger Art und Anordnung angebracht werden. Die Zettel haben eine Minimalgröße, die für das Notieren eines Wortes ausreicht, beispielsweise 5 x 10 mm und eine Maximalgröße, die es erlaubt, eine Vielzahl von Zetteln auf einem DIN A4-Bogen anzuordnen, die Maximalgröße liegt beispielsweise bei 5 x 8 cm, vorzugsweise 25 x 50 mm. Entsprechend sind die Träger 20 formatiert, üblicherweise nehmen sie eine Reihe nebeneinander angeordneter Blöcke 22-26 auf, z.B. fünf bis zehn, wie dies in Fig. 1 dargestellt ist.

Die Träger 20 können komplett aus einem Permanentmagneten gefertigt sein, sie können aber auch eine beliebige, flache Tragstruktur aus Kunststoff, Metall oder Holz aufweisen, in die einzelne, kleine Permanentmagnete eingearbeitet oder auf der derartige Permanentmagnete befestigt sind. Dadurch kann man mit handelsüblichen Magnetformaten beliebige Träger 20 herstellen, deren Herstellung vereinfacht und verbilligt sich somit. Wie die Figur zeigt, sind die Träger 20 relativ flach, ihre Höhe liegt typischerweise bei wenigen Millimetern. Sie sollen optisch nicht auffallen, ihr Hauptzweck liegt darin, mehrere Blöcke 22-26 nebeneinander lösbar zu halten.

Fig. 2 zeigt ein erstes Ausführungsbeispiel einer tafelartigen Platte 34 in Form einer handlichen Reisemappe. Sie besteht aus einer starren, flachen Unterlage aus kunststoff- oder lederbezogener Pappe, die einerseits eine steife, plane Oberfläche 38 für die lösbare Befestigung eines Blattes Papier 40 und andererseits einen aus zwei Teilbereichen bestehenden Rand 42 aus Metall, vorzugsweise Eisen bzw. Stahl, ausbildet. Letzterer kann dünn, beispielsweise mit Leder, überzogen bzw. beschichtet sein. Auf der Oberfläche 38 wird das Blatt 40 in geeigneter, an sich bekannter Weise befestigt, hierfür kann man doppelseitiges Klebeband, spezielle Clips, die das Blatt 40 randseitig halten oder dergl. benutzen. Wie die Figur zeigt, ist der Rand relativ schmal, er hat typischerweise eine Breite von wenigen Zentimetern, von beispielsweise 3 cm. Auf dem Rand 42 sind mehrere Notizeinheiten 18 in beliebiger Anordnung befestigt. Die Haftung auf dem Rand 42 kommt dadurch zustande, daß die Permanentmagnete der Notizeinheit 18 auf dem magnetisierbaren Material des Randes 42 haften.

Die einzelnen Notizeinheiten 18, die sich auf dem Rand 42 befinden, können jederzeit gegen andere Notizeinheiten ausgetauscht, an anderer Stelle des Randes 42 befestigt oder auch für eine andere tafelartige Platte, wie sie beispielsweise die Fig. 3 oder 4 zeigt, benutzt werden. An der Unterlage 36 sind seitlich und neben dem Rand 42 Flügel 44 befestigt, die im dargestellten Zustand nach unten gefaltet sind. Werden sie auf die Oberfläche 38 geschlagen, schützen sie die Anordnung. Diese Flügel 44 können auch entfallen, wenn man auf einen derartigen Schutz verzichtet.

Wie Fig. 2 zeigt, befinden sich auf dem Blatt 40 eine Vielzahl von einzelnen Zetteln 28, 30, 32, die unterschiedliche Informationen tragen und unterschiedliches Format haben. Die Zettel sind auch unterschiedlich eingefärbt. Das mit den Zetteln 28-32 beklebte Blatt 40 hat eine schon weitgehend geordnete Darstellung der Gesamtinformation, einige Zettel sind noch nicht eingeordnet.

Fig. 3 zeigt eine gegenüber Fig. 2 wesentlich größere tafelartige Platte in Form einer Standtafel. Sie ist in der gezeigten Darstellung für zwei Reihen DIN A4-Papierblätter 40 vorgesehen, jede Reihe hat sieben Plätze für derartige Blätter 40. Die Präsentationstafel besteht aus einem Rand 42 aus rechteckförmigen Stahlprofilen. Um eine Teleskopierbarkeit zu erreichen, besteht der Rand aus einem nach rechts offenen, U-förmigen Teil, das mit einer Unterlage 36 ausgefüllt ist. In den offenen Rohren sind Rohre kleineren Querschnitts geführt, die untereinander über eine separate Unterlage 36' verbunden sind, die sich unmittelbar hinter der erstgenannten befindet. Wiederum Rechteckrohre noch kleineren Querschnittes sind in diesen Rohren geführt und wiederum durch eine Platte, die einen dritten Teil der Oberfläche 38 bildet, verbunden, diesmal aber durch einen rechten Teil des Randes 42 zusätzlich abgeschlossen. Aus der gezeigten, auseinandergezogenen Position kann diese Präsentationstafel in kleinere Positionen zusammengeschoben werden.

Die Präsentationstafel hat drei Standbeine 48, die unabhängig von der Auszugsposition eine Abstützung bieten.

In Fig. 4 ist eine tafelartige Platte in Form eines Arbeitspultes dargestellt. Bei ihr ist die Unterlage 36 vollständig durch eine dünne Stahlplatte realisiert, die mit einer dünnen Kunststoffschicht überzogen ist. Sie bietet Platz für zwei nebeneinander angeordnete Blätter 40 im DIN A4-Format. Seitlich neben diesen beiden Blättern und insbesondere oben und unten bleibt ein Rand 42 frei, auf dem sich in der gezeigten Darstellung mehrere Notizeinheiten 18 befinden. Die Unterlage 36 wird durch eine Tragstruktur abgestützt, die Pultform hat, sie besteht beispielsweise aus Holz.

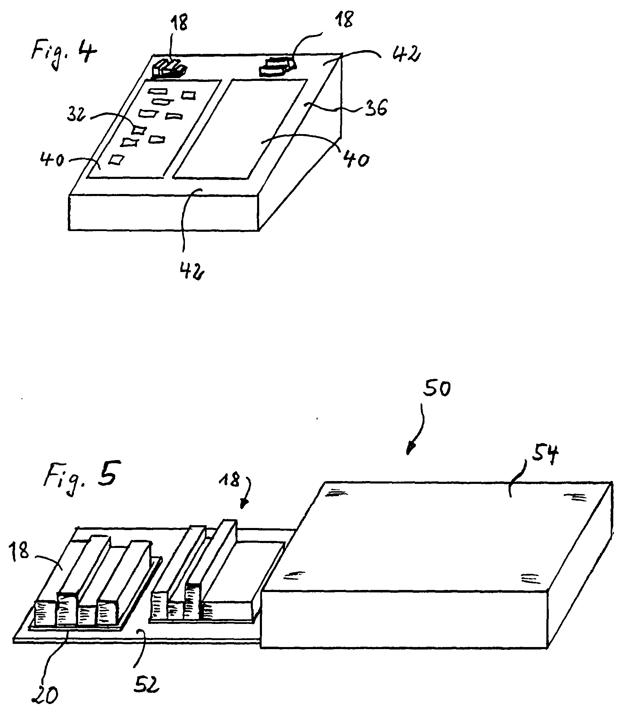

Fig. 5 schließlich zeigt eine Dose 50 bestehend aus einer Wanne und einem Schieber 52 aus Stahlblech. Gezeigt ist der Zustand, in dem der Schieber 52 teilweise herausgezogen ist. Wie aus der Figur ersichtlich ist, befinden sich auf der Oberseite des Schiebers 52, der Schieber wird auch Aufnahmewand genannt, eine Anzahl von Notizeinheiten 18. Sie haften auf dem Schieber 52 aufgrund der magnetischen Wechselwirkung. Im eingeschobenen Zustand sind die Notizeinheiten 18 geschützt. Im gezeigten, herausgezogenen Zustand des Schiebers 52 können Notizeinheiten 18 entnommen oder eingelegt werden.

Die Wanne der Dose 50 hat eine durchsichtige Wand 54. Dadurch ist es möglich, die in einer Dose 50 befindlichen Notizeinheiten sehen zu können, ohne die Dose 50 öffnen zu müssen.

Pro Träger 20 ist mindestens ein Block 22 - 26 vorgesehen, ein Träger 20 kann aber auch mehrere Blöcke aufnehmen 22 - 26. Anstelle der rückwärtig mit Haftkleber beschichteten Zettel 28 - 32 können auch Zettel aus permanentmagnetischem, flexiblen, dünnen, beschreibbaren Material, sogenanntes Magnetpapier, verwendet werden. Bei glatter Oberfläche ist die Schrift abwischbar. Magnetpapier eignet sich auch für dauerhaft beschriftete Zettel, z. B. für den Schulunterricht oder für Vorträge.

## Patentansprüche

1. Vorrichtung zum Ordnen und Präsentieren von Informationen mit a) einer tafelartigen Platte (34), die einerseits einen planen Oberflächenbereich hat, auf dem mindestens ein Blatt Papier (40) befestigbar ist und die andererseits einen metallischen, magnetisierbaren Rand (42) hat und mit b) einer Mehrzahl von Notizeinheiten (18), die jeweils aus einem flachen, permanentmagnetischen Träger (20) und mindestens einem auf diesem Träger (20) angeordneten Block (22 bis 26) aus gleichformatigen Zetteln (28 bis 32) bestehen, die rückseitig zumindest teilweise mit Haftkleber beschichtet sind und die auf dem Träger (20) festgelegt sind, wobei die Notizeinheit (18) aufgrund des magnetischen Trägers (20) lösbar auf dem magnetisierbaren Rand (42) der Platte (34) haftet.

2. Vorrichtung nach Anspruch 1, dadurch gekennzeichnet, daß die tafelartige Platte (34) ein handhabbares Format hat, vorzugsweise für die Aufnahme eines DIN A4-Blattes (40) geeignet ist und einen an zumindest zwei Seiten hiervon vorstehenden Rand (42) aus Eisen- oder Stahlblech aufweist.

3. Vorrichtung nach Anspruch 1, dadurch gekennzeichnet, daß die tafelartige Platte (34) die Größe einer Präsentationstafel hat und für die Aufnahme einer größeren Zahl, zumindest von sechs DIN A4-Blättern (40) geeignet ist.

4. Vorrichtung nach Anspruch 3, dadurch gekennzeichnet, daß die tafelartige Platte (34) durch Teleskopieren des als Rahmen ausgeführten Randes (42) und mit diesem verbundener, einzelner Unterlagen (36, 36') vergrößert und verkleinert werden kann.

5. Vorrichtung nach Anspruch 1, dadurch gekennzeichnet, daß eine Zetteleinheit (18) Blöcke (22-26) mit Zetteln (28-32) einer ersten Farbe und Blöcke (22-26) zumindest einer weitere Farbe aufweist.

6. Vorrichtung nach Anspruch 1, dadurch gekennzeichnet, daß eine Zetteleinheit (18) Blöcke (22-26) mit Zetteln (28-32) mit einem ersten Format und Blöcke (22-26) zumindest eines zweiten Formats aufweist.

7. Vorrichtung nach einem der Ansprüche 1 bis 6, dadurch gekennzeichnet, daß die Zettel (28-32) eine minimale Größe von 5 x 10 mm und eine maximale Größe von 50 x 100, vorzugsweise 25 x 50 mm haben.

8. Vorrichtung nach einem der Ansprüche 1 bis 7, dadurch gekennzeichnet, daß die Zettel (28-32) eines Blocks (22-26) aufgrund der einseitigen, teilflächigen oder ganzflächigen Beschichtung mit Haftkleber lösbar aufeinander und auf dem Blatt Papier (40) haften.

9. Vorrichtung nach einen der Ansprüche 1 bis 8, dadurch gekennzeichnet, daß die Zetteleinheit (18) einen Träger (20) in Form eines flachen Plättchens haben, das aus einem permanentmagnetischen Material hergestellt ist oder mit dem Permanentmagneten verbunden sind.

10. Vorrichtung nach einem der Ansprüche 1 bis 9, gekennzeichnet durch Dosen (50), die im geschlossenen Zustand eine Lage mehrerer, nebeneinander angeordneter Notizeinheiten umschließen und im geöffneten Zustand den Zugriff zu jeder einzelnen Notizeinheit (18) ermöglichen.

11. Vorrichtung nach Anspruch 10, dadurch gekennzeichnet, daß die Dosen (50) eine magnetisierbare Aufnahmewand (54) haben, auf der die permanentmagnetischen Träger (20) der Notizeinheiten (18) haften.

12. Vorrichtung nach Anspruch 11, dadurch gekennzeichnet, daß die Dosen (50) eine durchsichtige, der Aufnahmewand (54) gegenüberliegende Wand aufweisen.

13. Vorrichtung nach Anspruch 11, dadurch gekennzeichnet, daß die Aufnahmewand (54) als Schieber (52) ausgebildet ist.

## Claims

1. Device for storing and presenting information with a) a plate-like board (34) with on the one hand a plane surface area upon which at least one sheet of paper (40) may be secured and on the other hand a metallic, magnetisable edge (42) and with b) a plurality of note-pad units (18) constituted each by a flat, permanent magnetic support (20) and least one pad (22 to 26) consisting of slips of paper of the same format (28 to 32) arranged on said support (20), whereby the slips of paper are at least partially coated on their back side with a pressure-sensitive adhesive and are secured to the support (20), and because of its magnetic support (20), the note-pad unit is detachably attached to the magnetisable edge (42) of the board (34).

2. Device according to claim 1 characterized by the plate-like board (34) having a handy format, preferably suited for the receipt of a DIN A4 sheet of paper (40) and also showing an edge (42) projected from it at least two sides made from iron or steel metal.

3. Device according to claim 1, characterized by the plate-like board (34) having the size of a presentation board and being suitable for receiving a larger number of DIN A4 sheets of paper (40), at least six.

4. Device according to claim 3 characterized by the plate-like board (34) being able to be maximized or minimized by telescoping the edge (42) projected as a frame and connected with this, individual bases (36, 36').

5. Device according to claim 1 characterized by a piece of paper unit (18) showing pads (22-26) with pieces of paper (28-32) of a first colour and pads (22-26) of at least a further colour.

6. Device according to claim 1 characterized by a piece of paper unit (18) showing pads (22-26) with pieces of paper (28-32) with a first format and pads (22-26) of at least a second format.

7. Device according to one of the claims 1 to 6 characterized by the pieces of paper (28-32) having a minimal size of 5 x 10 mm and a maximal size of 50 x 100, preferably 25 x 50 mm.

8. Device according to one of the claims 1 to 7 characterized by the pieces of paper (28-32) of a pad (22-26) due to the one-sided, partlysided or totally sided coating with pressure-sensitive adhesive being attached detachably on each other or on the sheet of paper (40).

9. Device according to one of the claims 1 to 8 characterized by the note-pad unit (18) having a support (20) in the shape of a flat sheet of a permanent magnetic material or connected with a permanent magnet.

10. Device according to one of the claims 1 to 9 characterized by the boxes (50) which enfold in the closed state an amount of several note units being arranged next to each other and in the open state enable access to each individual note unit (18).

11. Device according to claim 10 characterized by the boxes (50) having a magnetisable receiving wall (54) on which the permanent magnetic support (20) of the note units (18) are attached.

12. Device according to claim 11 characterized by the boxes (50) having a transparent wall being opposite of the receiving wall (54).

13. Device according to claim 11 characterized by the receiving wall (54) being projected as a slide (52).

## Revendications

1. Dispositif de classement et de présentation d'informations comportant a) une plaque (34) ressemblant à un tableau, qui présente d'un côté une région de surface plane sur laquelle pour le moins une feuille de papier (40) peut être fixée et qui, de l'autre côté, présente un bord (42) métallique et aimantable, et b) une multitude d'unités de notes (18) qui se composent respectivement d'un support (20) plat et permanentement magnétique ainsi que d'un bloc (22 à 26) au moins disposé sur ledit support (20) et composé de feuillets (28 à 32) de même format qui sont recouverts au dos, du moins en partie, de colle adhésive et qui sont fixés sur le support (20), l'unité de notes (18) adhérant, en raison du support magnétique (20), de manière amovible au bord aimantable (42) de la plaque (34).

2. Dispositif selon la revendication 1, caractérisé par le fait que la plaque (34) ressemblant à un tableau présente un format aisé à manier, qu'elle est de préférence apte à recevoir une feuille de format DIN A4 (40) et qu'elle présente du moins sur deux côtés un bord (42) en tôle de fer ou d'acier qui en fait saillie.

3. Dispositif selon la revendication 1, caractérisé par le fait que la plaque (34) ressemblant à un tableau présente la dimension d'un tableau de présentation et qu'elle est apte à recevoir un nombre élevé de feuilles, du moins six feuilles d'un format de DIN A4 (40).

4. Dispositif selon la revendication 3, caractérisé par le fait que la plaque (34) ressemblant à un tableau peut être agrandie et réduite en télescopant le bord (42) réalisé en tant que cadre ainsi que les bases individuelles (36, 36') reliées avec ledit bord.

5. Dispositif selon la revendication 1, caractérisé par le fait qu'une unité de feuillets (18) présente des blocs (22-26) avec des feuillets (28-32) d'une première couleur ainsi que des blocs (22-26) d'une autre couleur du moins.

6. Dispositif selon la revendication 1, caractérisé par le fait qu'une unité de feuillets (18) présente des blocs (22-26) avec des feuillets (28-32) d'un premier format ainsi que des blocs (22-26) d'un second format du moins.

7. Dispositif selon l'une des revendications 1 à 6, caractérisé par le fait que les feuillets (28-32) présentent une dimension minimale de 5 x 10 mm et une dimension maximale de 50 x 100, de préférence de 25 x 50 mm.

8. Dispositif selon l'une des revendications 1 à 7, caractérisé par le fait que, en raison du recouvrement unilatéral réalisé sur une surface partielle ou sur l'ensemble de la surface avec de la colle adhésive, les feuillets (28-32) d'un bloc (22-26) adhèrent de manière amovible l'un sur l'autre ainsi que sur la feuille de papier (40).

9. Dispositif selon l'une des revendications 1 à 8, caractérisé par le fait que les unités de feuillets (18) présentent un support (20) en forme d'une plaquette plate qui est fabriquée d'un matériau permanentement magnétique ou qui est reliée avec l'aimant permanent.

10. Dispositif selon l'une des revendications 1 à 9, caractérisé par des boîtes (50) qui, en état fermé, renferment une série de plusieurs unités de notes disposées l'une à côté de l'autre et qui, en état ouvert, permettent l'accès individuel à chacune des unités de notes (18).

11. Dispositif selon la revendication 10, caractérisé par le fait que les boîtes (50) présentent une paroi de réception (54) aimantable à laquelle adhèrent les supports (20) permanentement magnétiques des unités de notes (18).

12. Dispositif selon la revendication 11, caractérisé par le fait que les boîtes (50) présentent une paroi transparente disposée en face de ladite paroi de réception (54).

13. Dispositif selon la revendication 11, caractérisé par le fait que la paroi de réception (54) est réalisée en tant que coulisseau (52).
